# DEMANDE DE BREVET EUROPEEN

(11) **EP 2 281 438 A1**
(43) Date de publication de la demande: **09.02.2011**
(21) Numéro de dépôt: 10159269.9
(22) Date de dépôt: 07.04.2010
(51) Int. Cl.: A01G 1/08, A01G 13/02

(54) **Elément de bordure de jardin**

(30) Priorité: 30.07.2009 FR 0955354
(71) Demandeur: Mecaconcept, 91460 Marcoussis (FR)
(72) Inventeur: Dalac, Jean-François, 84300, CAVAILLON (FR)
(74) Mandataire: Pontet, Bernard

(57) **Abrégé**

L'invention concerne un élément (6, 106-606) de bordure de jardin, **caractérisé en ce qu**'il a une forme générale allongée s'étendant suivant une direction longitudinale, notamment droite ou courbe ou brisée, ayant dans au moins une section transversale à ladite direction longitudinale, une forme définie entre un bord extérieur (7, 107-607) et un bord intérieur (8, 108-608) de la bordure de jardin, ladite forme présentant en partant du bord extérieur (7, 107-607) et en allant vers le bord intérieur (8, 108-608), un segment extérieur (9, 109-609) sensiblement horizontal, se prolongeant du côté intérieur par une paroi de retenue (10, 110-610) sensiblement verticale, et en ce que la paroi de retenue se prolonge en outre du côté intérieur par au moins un segment intérieur (11, 111-611) formant une ligne, notamment droite ou courbe ou brisée, s'étendant suivant une directement générale sensiblement horizontale jusqu'au bord intérieur (8, 108-608).

## Description

### Domaine de l'invention :

L'invention concerne le domaine des accessoires de jardins, et plus particulièrement les bordures de jardins destinés à délimiter physiquement et/ou visuellement des sols de différentes natures, par exemple du gazon par rapport à de la terre, un chemin par rapport à un gazon etc. Une telle bordure peut être soit ouverte, c'est-à-dire avoir des extrémités non jointes, par exemple en délimitant une zone accolée à une clôture ou à un mur, soit fermée, par exemple de manière à entourer un massif ou un pied d'arbre etc.

### Etat de la technique :

On connaît des bordures de jardin traditionnelles destinées à délimiter physiquement et visuellement un massif végétal ou à séparer deux zones distinctes de massifs. De telles bordures sont par exemple constituées de planchettes ou demi-rondins en bois orientés verticalement et accolés les uns aux autres pour former un rempart. Ces planchettes ou demis-rondins sont reliés les uns aux autres par des moyens souples permettant d'enrouler / dérouler l'ensemble en vue du stockage ou de l'installation. D'autres types de bordures sont constitués de rondins indépendants et accolés verticalement les uns aux autres. On connaît également des bordures constituées d'une ou de plusieurs planches orientées horizontalement et superposées, de manière à former également un rempart. De telles bordures sont onéreuses, elles nécessitent la fabrication d'un ensemble d'éléments en bois, qui sont généralement traités « autoclave », et doivent dans certains cas être assemblés les uns aux autres. Ce type de bordures constituées de bois massif est lourd, donc parfois délicat à manutentionner. Le volume de stockage n'est guère optimisé. L'installation de telles bordures est également délicate puisque qu'elle impose l'enfoncement dans le sol d'une partie inférieure de la bordure ou la fixation de piquets dans le sol, répartis régulièrement sur la longueur de ladite bordure, auxquels seront fixés les planchettes, demi-rondins, rondins ou planches. Ainsi la pose des bordures est en elle-même une opération longue, demandant des efforts physiques et un minimum de dextérité.

En outre, on utilise couramment dans les jardins des particules destinées à recouvrir le sol, telles que des écorces de pin ou de la pouzzolane. Ces particules empêchent la pousse de mauvaises herbes aux pieds des végétaux et forment un écran efficace contre l'évaporation de l'eau. Ce type de particules est donc très efficace en vue d'économie d'eau. On n'observe cependant dans les dispositifs connus de bordure de jardin, aucune synergie ou coopération avec des particules de revêtement précitées.

Par ailleurs, dans le cas où l'on pose une nappe de type géotextile sur une zone de terre afin d'empêcher la pousse de mauvaises herbes, il est assez peu aisé de découper cette nappe selon un dessin net et de la maintenir plaqué au sol sur son pourtour. En outre, ce pourtour est peu esthétique et/ou doit requérir un travail particulier. D'éventuelles bordures de jardin connues n'offrent là encore aucune possibilité de synergie ou de coopération avec ce type de nappe.

### But de l'invention :

Le but de la présente invention est de pallier tout ou partie des inconvénients précédents, en proposant des éléments de bordure de jardin qui soient particulièrement esthétiques, simples et aisés à poser, polyvalents car adaptables à des configurations de géométrie et de pose multiples.

### Objet de l'invention :

A cet effet, l'invention a pour objet un élément de bordure de jardin, ayant une forme générale allongée s'étendant suivant une direction longitudinale, notamment droite ou courbe ou brisée, ayant dans au moins une section transversale à ladite direction longitudinale, une forme définie entre un bord extérieur et un bord intérieur de la bordure de jardin, ladite forme présentant en partant du bord extérieur et en allant vers le bord intérieur, un segment extérieur sensiblement horizontal, se prolongeant du côté intérieur par une paroi de retenue sensiblement verticale, et en ce que la paroi de retenue se prolonge en outre du côté intérieur par au moins un segment intérieur formant une ligne, notamment droite ou courbe ou brisée, s'étendant suivant une directement générale sensiblement horizontale jusqu'au bord intérieur.

L'invention permet, par l'assemblage de différents éléments semblables choisis dans une même gamme, de poser une bordure de jardin complète, de façon extrêmement rapide et aisée, sans recourir à des équipements particuliers de jardinage. L'invention permet également de s'adapter à des configurations de sol très diverses, pour border par exemple :
- un chemin vis-à-vis d'un gazon,
- un gazon vis-à-vis d'une zone plantée de massifs ou d'espèces végétales autres que le gazon, cette zone pouvant éventuellement être recouverte d'une nappe de géotextile.

Compte tenu de la diversité des formes d'éléments proposées dans la gamme, la bordure peut prendre de multiples formes géométriques, simples ou complexes, l'assemblage s'effectuant par fixation / clippage des éléments mis bout à bout, selon leur direction longitudinale. Les formes obtenues peuvent être soit fermées, c'est-à-dire avec des extrémités jointes, soit ouverte, lorsqu'une zone à délimiter est accolée à une clôture, un mur ou autre.

Des bordures de jardin formées d'éléments suivant l'invention sont particulièrement intéressantes pour border une nappe de géotextile posée au sol, notamment pour la plaquer sur son bord et afin de la tailler en s'aidant de la bordure faisant office de gabarit (découpe le long du bord extérieur des éléments à l'aide d'un outil adapté).

Dans le cas de bordure de jardin fermée, c'est-à-dire à extrémité jointes, sur une surface relativement compacte (délimitant un cercle d'un diamètre de l'ordre d'un mètre par exemple, autour d'un pied d'arbre), des éléments de bordure de jardins selon l'invention permettent de tirer le meilleur parti des particules végétales et/ou minérales et/ou synthétiques telles que les écorces de pins ou la pouzzolane que l'on dépose traditionnellement au pied des végétaux. Le plateau formé au centre de la bordure fermée constitue en effet un support spécialement adapté pour recevoir des particules, en même temps que ces dernières participent à la stabilité de la bordure au sol, en raison de leur poids et de leur répartition sur le plateau.

Selon d'autres caractéristiques avantageuses de l'invention, le segment extérieur constitue un premier segment se prolongeant par un second segment s'élevant de façon sensiblement verticale, lui-même se prolongeant par un troisième segment sensiblement horizontal, lui-même se prolongeant par un quatrième segment plongeant vers le sol de façon sensiblement verticale, les second, troisième et quatrième segments constituant la paroi de retenue dont l'épaisseur correspond à l'écart entre les second et quatrième segment, le segment intérieur formant un cinquième segment prolongeant le quatrième segment.

Selon d'autres caractéristiques avantageuses de l'invention, l'élément est constitué d'un seul élément monobloc en matière plastique obtenue par moulage ou injection.

Selon d'autres caractéristiques avantageuses de l'invention, au moins dans la zone de la paroi de retenue, l'élément est constitué, suivant la direction longitudinale, d'une série de formes élémentaires identiques et juxtaposées les unes aux autres, délimitées entre elles par des discontinuités de surface, telles que des angles, empreintes creuses ou fentes.

Selon d'autres caractéristiques avantageuses de l'invention, chaque forme élémentaire a un bord supérieur arqué suivant un angle de vue perpendiculaire à la direction longitudinale.

Selon d'autres caractéristiques avantageuses de l'invention, l'élément comporte au moins une nervure de rigidification orientée transversalement à la direction longitudinale, située notamment au droit d'une extrémité de l'élément.

Selon d'autres caractéristiques avantageuses de l'invention, l'élément comprend à ses deux extrémités opposées suivant la direction longitudinale des moyens de fixation permettant de le fixer à au moins un second élément de section transversale analogue, ce second élément étant également pourvu de moyens de fixation de formes conjuguées.

Selon d'autres caractéristiques avantageuses de l'invention, la direction longitudinale est rectiligne.

Selon d'autres caractéristiques avantageuses de l'invention, la direction longitudinale s'étend suivant la forme d'un secteur angulaire, dont l'angle est choisi parmi les valeurs suivantes : 180°, 90° ou un angle inférieur à 90°, par exemple 22,5°.

Selon d'autres caractéristiques avantageuses de l'invention, la direction longitudinale s'étend en formant un angle à 90°.

Selon d'autres caractéristiques avantageuses de l'invention, les segments extérieur et intérieur de part et d'autre de la paroi de retenue sont sensiblement à la même hauteur.

Selon d'autres caractéristiques avantageuses de l'invention, le segment intérieur, situé du côté intérieur de la paroi de retenue est à une hauteur inférieure à celle du segment extérieur, situé du côté extérieur.

Selon d'autres caractéristiques avantageuses de l'invention, ledit au moins segment intérieur comprend un unique segment sensiblement horizontal prolongé par un segment relevé de façon sensiblement verticale au droit du bord intérieur de l'élément.

Selon d'autres caractéristiques avantageuses de l'invention, ledit au moins segment intérieur se décompose en au moins trois parties sensiblement horizontales dont une partie centrale est surélevée par rapport aux deux autres parties, situées respectivement du côté extérieur et du côté intérieur, ladite partie du côté intérieur se prolongeant par un segment relevé de façon sensiblement verticale au droit du bord intérieur de l'élément.

Selon d'autres caractéristiques avantageuses de l'invention, l'élément comprend des orifices ménagés dans des zones sensiblement horizontales, permettant d'être traversés par des moyens d'ancrage de l'élément au sol, tels que des piquets

L'invention a également pour objet une bordure de jardin comprenant plusieurs éléments ayant tout ou partie des caractéristiques précédentes.

L'invention a encore pour objet un procédé de pose au sol d'une nappe de type géotextile ou analogue et d'un ensemble d'éléments de bordure de jardin, chaque élément ayant une forme générale allongée s'étendant suivant une direction longitudinale, notamment droite ou courbe ou brisée, ayant dans au moins une section transversale à ladite direction longitudinale, une forme définie entre un bord extérieur et un bord intérieur de la bordure de jardin, **caractérisé en ce qu**'il comprend les étapes suivantes :
- pose au sol de la nappe ayant des dimensions supérieures au contour définitif de la zone à recouvrir,
- pose au sol et assemblage entre eux de plusieurs éléments de bordure de jardin, par-dessus la nappe, en suivant un dessin correspondant sensiblement au contour définitif de la nappe et de la bordure souhaitée,
- découpe d'une partie de la nappe débordant à l'extérieur des éléments de la bordure de jardin, notamment à l'aide d'un outil de coupe, en suivant le bord extérieur des éléments qui sont utilisés à la façon d'un gabarit.

### Description de plusieurs modes de réalisation de l'invention :

L'invention sera mieux comprise à la lecture de la description qui va suivre d'un mode de réalisation non limitatif de l'invention et à la lumière des dessins annexés sur lesquels :
- la figure 1 représente une vue d'ensemble en perspective de différentes bordures de jardin constituées d'éléments de bordure de jardin suivant plusieurs mode de réalisation de l'invention,
- la figure 2 représente en perspective un élément de bordure de jardin suivant un premier mode de réalisation de l'invention, dans lequel l'élément à une forme générale semi-circulaire, notamment pour être assemblé deux par deux.
- la figure 3 représente une vue en section A-A de la figure 4 de la bordure de jardin de la figure 2,
- la figure 4 représente une vue de dessus de la bordure de jardin de la figure 2,
- les figures 5 et 6 représentent respectivement des vues de côté et de dessous de la bordure de jardin de la figure 2,
- les figures 7 et 8 représentent respectivement des vues en perspective de dessus et de dessous de deux parties identiques destinées à être assemblées pour former la bordure de jardin de la figure 2,
- les figures 9 et 10 sont des vues respectivement en perspective et de dessus de deux éléments de bordure de jardin selon un second mode de réalisation de l'invention, dans lequel l'élément a une forme rectiligne (à la figure 9, l'élément étant représenté tronqué suivant une section transversale),
- la figure 11 est une vue de dessus d'un élément de bordure de jardin suivant un troisième mode de réalisation de l'invention, dans lequel l'élément a la forme générale d'un secteur angulaire « à petit rayon »,
- les figures 12 et 13 sont des vues de dessus de deux éléments de bordure de jardin selon respectivement un quatrième et un cinquième modes de réalisation de l'invention, dans lesquels l'élément a la forme générale d'un secteur angulaire « à grand rayon » respectivement concave ou convexe,
- la figure 14 est une vue de dessus d'un élément de bordure de jardin suivant un sixième mode de réalisation de l'invention, dans lequel l'élément a la forme générale d'un angle en équerre,
- la figure 15 est une vue en perspective (tronquée suivant une section transversale) d'un élément de bordure de jardin suivant un septième mode de réalisation de l'invention, dans lequel l'élément de jardin à une forme semi-circulaire, constituant une variante de l'élément des figures 2 à 8,
- la figure 16 est une vue de dessus d'une bordure de jardin suivant la figure 15, dans laquelle chaque élément comporte un trou de passage d'un tuteur.

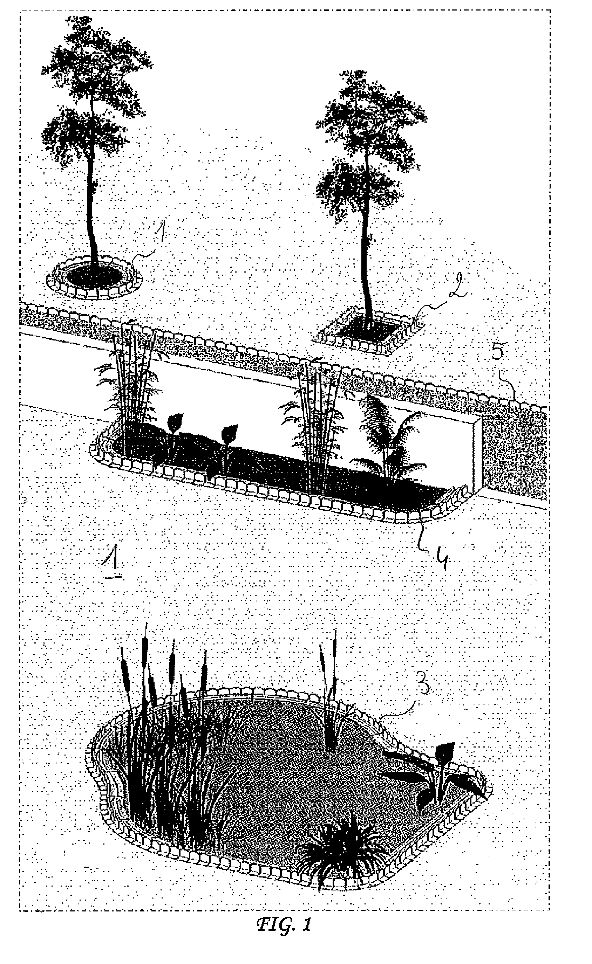

On a représenté à la figure 1 un espace vert, à titre d'exemple, dans lequel on identifie différentes configurations d'installation de bordures de jardin suivant l'invention. Les bordures de jardin peuvent se présenter selon des configurations d'entourage de pied d'arbre (ou de petits massifs), comme indiqué aux repères 1 et 2, délimitant une surface interne fermée relativement réduite (de l'ordre de 1 à 2 m2). Elles peuvent également se présenter selon une configuration fermée délimitant une surface interne plus étendue, par exemple de plusieurs mètres carrés, comme indiqué au repère 3. De telles bordures délimitent des massifs plus étendus, des plans d'eau etc. Le long d'un mur, la bordure de jardin illustrée au repère 4 peut être ouverte à ses extrémités, celles-ci reliant différentes zones du mur. Les bordures de jardin selon l'invention peuvent également délimiter un chemin d'une zone adjacente, par exemple gazonnée, comme représenté au repère 5. On ne voit, des bordures de jardin suivant l'invention répondent à des besoins de formes très variées. De telles bordures sont formées de plusieurs éléments de formes générales allongées, qui sont mis bout à bout, à la façon d'un circuit automobile d'enfant, et assemblés les uns aux autres. Les éléments mis bout à bout sont semblables dans leur structure et leur mode d'assemblage mais peuvent différer dans leur forme générale, afin de prendre la forme d'ensemble souhaitée pour la bordure de jardin.

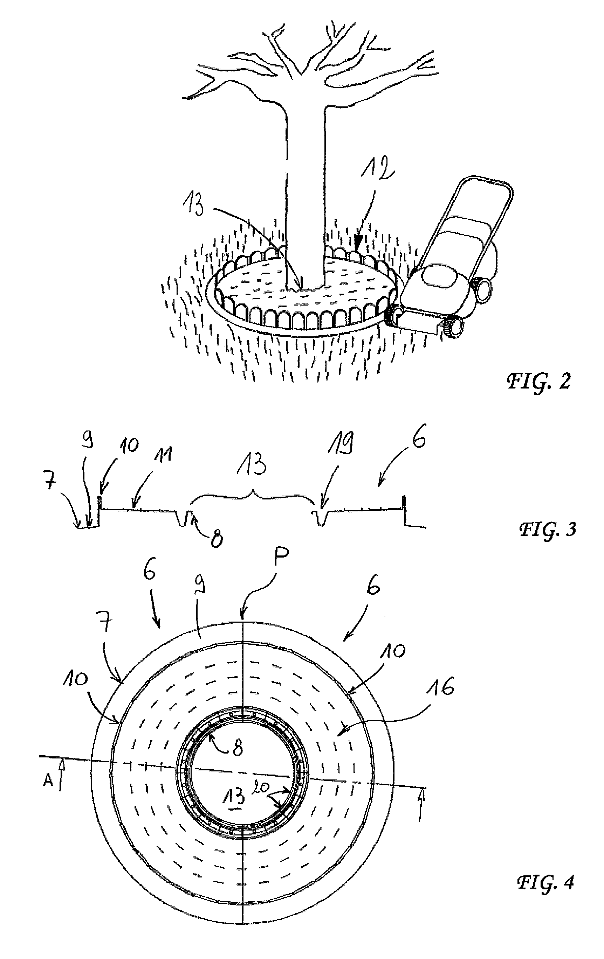

D'une façon générale, l'élément de bordure 6 de jardin selon l'invention a une forme générale allongée s'étendant suivant une direction longitudinale qui peut être droite, courbe ou brisée (cf. figure 3 et 4). Dans au moins une section transversale à cette direction longitudinale, la forme de cet élément est définie entre un bord extérieur 7 et un bord intérieur 8 de la bordure et présente, en partant du bord extérieur 7 et en allant vers le bord intérieur 8 dans le plan de ladite au moins une section transversale, un segment extérieur 9 sensiblement horizontal, se prolongeant du côté intérieur par une paroi de retenue 10 sensiblement verticale, cette dernière se prolongeant du côté intérieur par au moins un segment intérieur 11 s'étendant suivant une direction générale sensiblement horizontale jusqu'au bord intérieur 8. Le segment extérieur 9 forme un rebord à la base de l'élément qui prend appui sur le sol. Ledit au moins un segment intérieur 11 peut lui-même avoir la forme générale d'une ligne droite, courbe ou brisée. Dans l'ensemble du texte, les termes « horizontal » et « vertical » s'entendant lorsque l'élément de bordure 6 est posé classiquement au sol en appui sur sa base. L'expression « sensiblement horizontal » ou « sensiblement vertical » signifie qu'une légère inclinaison est possible par rapport à l'horizontal ou à la verticale, inférieure à 5°. Les termes « extérieur » et « intérieur » s'entendent classiquement par rapport à une zone verte, plantée d'un gazon ou de tout autre végétal ou massif, où l'on est susceptible de passer une tondeuse. Classiquement le côté extérieur est situé du côté de cette zone verte. Le côté intérieur peut être situé du côté d'une zone recouverte d'écorces, de pouzzolane ou analogue, ou du côté d'un chemin gravillonné, goudronné ou analogue, ou même du côté d'un second massif ou de plantes entouré(es) de terre par exemple. Plus généralement, la bordure vise à délimiter une zone donnée de surface généralement réduite, coté intérieur, par rapport à une zone de surface généralement plus étendue, côté extérieur, bien que ce principe soit donné à titre d'exemple et que des configurations inversées soient envisageables sans sortir du cadre de l'invention.

Chaque élément de la bordure est monobloc, donc réalisé d'un seul tenant, par exemple en matière plastique injectée, typiquement en PEHD (polyéthylène haute densité), PP (polypropylène) etc.

On va décrire ci-après plusieurs modes de réalisation d'élément de bordure de jardin selon l'invention.

### Premier mode de réalisation de l'invention :

En référence à l'exemple de réalisation de la figure 2, la bordure de jardin a la forme générale d'un plateau 12 circulaire pourvu en son centre d'une ouverture 13 pour le passage du pied de l'arbre 14 ou d'un quelconque végétal. Dans d'autres exemples de réalisation, le plateau peut avoir une forme carrée ou autre, sans sortir du cadre de l'invention.

Le plateau 12 est composé de deux éléments de bordure 6 identiques formant chacun un demi-plateau circulaire, pourvu d'une ouverture centrale semi-circulaire. Chaque élément ou demi-plateau a de ce fait une forme allongée entre deux extrémités inscrites dans le même plan de joint P, par lequel les demi-plateaux 6 sont assemblés (figures 4 à 8). Chaque élément s'étend suivant une direction longitudinale qui est courbe, et en l'occurrence circulaire dans le cas d'espèce.

Chaque élément 6 du plateau 12 comporte, parallèlement à son bord périphérique 7 une paroi de retenue 10 s'élevant se façon sensiblement verticale et transversale à l'orientation générale du plateau (figure 3).

Dans la zone de la paroi de retenue 10, l'élément 6 est constitué, suivant la direction longitudinale, d'une série de formes élémentaires 14 identiques et juxtaposées les unes aux autres, délimitées entre elles par des discontinuités 15 de surface, telles que des angles, empreintes creuses ou fentes. Ces formes élémentaires 14 ont la forme de panneaux ou planchettes similaires à des planchettes de bois.

La hauteur de ces formes élémentaires 14 est par exemple comprise entre 5 et 20 cm. A des fins esthétiques, leur bord supérieur est arqué ou arrondi dans le sens longitudinal.

On précise que le segment extérieur 9 constituant le rebord extérieur du plateau 12 est délimité entre le bord extérieur 7 ou périphérique et la paroi de retenue 10. La largeur de ce rebord 8 est de préférence supérieure à 3 cm. Elle est par exemple comprise entre 5 et 10 cm, de manière à constituer une zone interdisant la pousse de gazon ou d'herbe au voisinage immédiat de la paroi de retenue. Ainsi, la lame d'une tondeuse peut en empiétant sur ce rebord extérieur couper l'herbe située au plus près du bord périphérique 7, ce qui dispense très avantageusement de recourir à un outil « coupe bordure ».

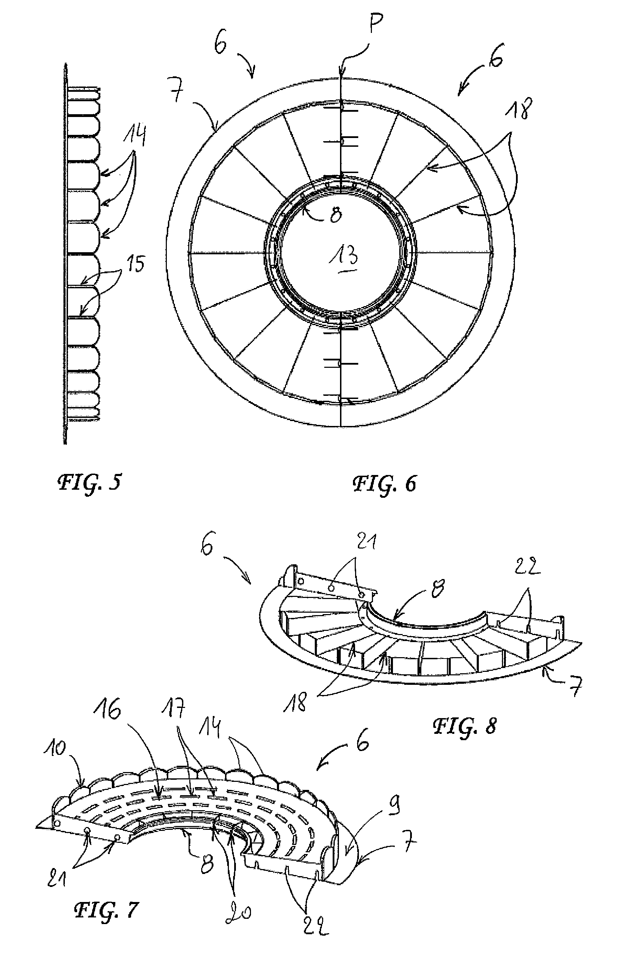

L'élément 6 comprend également un segment intérieur 11 qui constitue, vue de dessus, une surface de réception 16 de particules végétales et/ou minérales (écorces de pin, pouzzolane, etc.), disposée du côté de sa face supérieure (figure 7). Cette surface peut même accueillir du sable, du béton ou une matière analogue qui sera moulé sur l'élément. La surface de réception 16 est située entre la paroi de retenue 10 et l'ouverture centrale 13. La surface 16 supporte une couche de ces particules réparties sur celle-ci, la couche ayant une épaisseur de quelques centimètres. De cette manière, chaque élément 6 du plateau 12 est plaqué en raison du poids et de la répartition des particules sur celui-ci.

De manière à favoriser l'écoulement d'eau reçue par les éléments 6 au travers des particules dans la zone de la surface de réception 16, en direction de l'ouverture centrale 13, cette surface de réception 16 est inclinée entre une zone extérieure haute adjacente à la paroi de retenue 10 et une zone intérieure basse adjacente à l'ouverture centrale 13. La surface de réception a ainsi une forme tronconique (dans le cas d'un plateau non circulaire comme évoqué précédemment, par exemple s'il a une forme carrée, la surface de réception a la forme d'une pyramide inversée). Les éléments 6 de bordure selon l'invention permettent ainsi de collecter une quantité d'eau et de l'acheminer dans une zone utile, au niveau de l'ouverture centrale 13. L'inclinaison de la surface de réception est de l'ordre de quelques degrés, par exemple 5°.

Compte tenu de cette inclinaison, les particules végétales et/ou minérales ont tendance à s'agglutiner vers le centre. Pour éviter ce phénomène, on prévoit des aspérités 17 sur la surface de réception 16. Celles-ci sont par exemple des bossages circulaires continus ou discontinus, comme illustré aux figures 4 et 7. En outre, lorsque les éléments 6 de la bordure sont disposés autour du pied de l'arbre, l'espace laissé vide par ce dernier dans l'ouverture centrale 13 est comblé par des particules de manière à caler les particules entre d'une part la paroi de retenue 10 et d'autre part le tronc de l'arbre. Ce dernier forme une butée empêchant la descente des particules sur la surface de réception 16. Les particules conservent ainsi une position relativement stable.

Les éléments 6 du plateau 12 comprennent une série de nervures de rigidification 18 disposées dans une zone creuse du côté de leur face inférieure (figures 6 et 8), à l'opposé de la surface de réception 16. Ces nervures 18 sont par exemple agencées radialement. On en compte par exemple neuf par demi-plateau 6, y compris les nervures d'extrémités formant le plan de joint des demi-plateaux assemblés.

Dans ce mode de réalisation, une zone d'appui et de renfort 19 est prévu autour de l'ouverture centrale 13 de manière à augmenter la rigidité du bord de l'ouverture 13 (en formant un anneau de rigidification) et à constituer une zone d'appui au sol de cette partie intérieure de chaque élément du plateau 12. Cette zone d'appui et de renfort est constitué d'une série de nervures 20 disposées radialement dans une gorge accessible par la face supérieure de chaque élément 6 (figures 3, 4 et 7). Dans ce mode de réalisation, la surface de réception est surélevée par rapport au point le plus bas de l'élément 6, qui est constitué par le rebord extérieur 9 ou la zone d'appui et de renfort 19 du côté intérieur. On note que la hauteur de la paroi de retenue 10 a une hauteur du côté intérieur (vis-à-vis du segment intérieur 11) correspondant environ à la moitié de sa hauteur côté extérieur (vis-à-vis du segment extérieur 9).

L'assemblage entre les deux éléments 6 du plateau 12 autour du pied de l'arbre est conclu par l'utilisation de moyens de fixation rapide. Ceux-ci sont typiquement des systèmes « pions-encoches » 21, 22. Comme cela est visible aux figures 7 et 8, les deux nervures d'extrémités de chaque élément ou demi-plateau 6 comprennent, pour l'une, des pions 21, et pour l'autre des encoches 22. Les deux éléments 6 sont disposés de façon sensiblement symétrique autour du pied de l'arbre, de sorte que les moyens de fixation sont placés en opposition, un premier élément 6 étant posé au sol tandis que le second élément 6 est présenté par le dessus : les pions de l'un des éléments 6 sont placés en vis-à-vis des encoches de l'autre élément 6. Ainsi les pions 21 sont engagés en force latéralement dans les encoches 22 lorsque le second élément 6 est abaissé au niveau du premier. Les encoches 22 sont conformées pour constituer des butées assurant un positionnement adéquat des éléments 6 entre eux.

Les deux éléments 6 du plateau 12 étant identiques, un seul moule est nécessaire pour réaliser une telle bordure.

Le dimensionnement des deux éléments 6 du plateau 12 est tel qu'il permet d'utiliser la bordure autour d'arbres ayant un diamètre situé dans une plage déterminée. On peut prévoir une gamme de plusieurs bordures semblables dans leur structure, mais distinctes par leur taille. Une bordure « petit modèle » a par exemple une ouverture centrale ayant un diamètre de 15 cm. Une bordure « modèle intermédiaire » a par exemple une ouverture centrale ayant un diamètre de 20 cm. Une bordure « grand modèle » a par exemple une ouverture centrale d'un diamètre de 30 cm. Les dimensions extérieures du plateau 12, notamment le diamètre extérieur sont adaptées en conséquence du diamètre de l'ouverture intérieure.

D'autres modes de réalisation de l'invention sont présentés ci-après, uniquement en ce qu'ils se distinguent du premier mode de réalisation. Les moyens ayant des fonctions similaires à ceux déjà décrits comporteront les mêmes références, augmentées de 100, respectivement pour chaque mode de réalisation.

### Second mode de réalisation de l'invention :

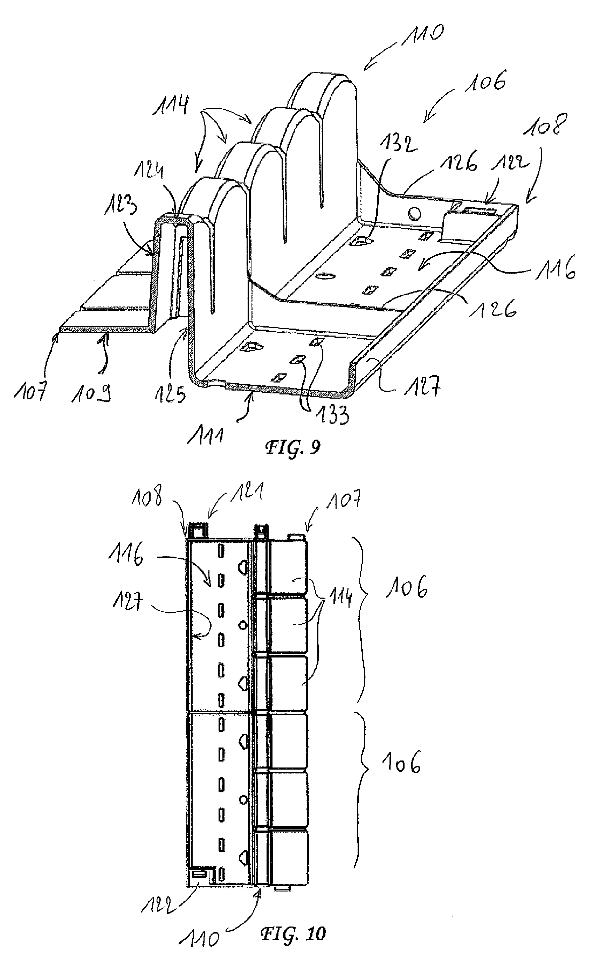

En référence à la figure 9 est présenté un second mode de réalisation de l'invention dans lequel l'élément 106 a une forme s'étendant suivant une direction longitudinale droite. A titre d'exemple, un tel élément rectiligne a une longueur de 0,58 m (d'autres dimensions étant bien entendu envisageables).

Dans au moins une section transversale à la direction longitudinale, l'élément comporte un segment extérieur 109 partant du bord extérieur 107. Ce segment extérieur 109 s'étend suivant une direction sensiblement horizontale jusqu'à la paroi de retenu 110 qui s'élève de façon sensiblement verticale. Du côté intérieur à la paroi de retenue 110, celle-ci se prolonge par au moins un segment intérieur 111 sensiblement horizontal.

Dans ce mode de réalisation, en considérant que le segment extérieur 109 constitue un premier segment, celui-ci se prolonge par un second segment sensiblement vertical 123, lui-même se prolongeant à son sommet par un troisième segment 124 sensiblement horizontal s'étendant du côté intérieur, lui-même se prolongeant du côté intérieur par un quatrième segment sensiblement vertical 125 plongeant vers la base de l'élément 106. Le quatrième segment 125 se prolonge à sa base par le segment intérieur 111. On note que dans ce mode de réalisation, la paroi de retenue 110 a une épaisseur définie par l'écart séparant le second 123 et le quatrième 125 segments (l'épaisseur est de l'ordre de 2 ou 3 cm, afin de rappeler l'épaisseur de panneaux ou de planchettes de bois traditionnelles). La paroi de retenue forme ainsi un corps creux. Bien que ceci n'ait pas été décrit ainsi concernant le premier mode de réalisation, où la paroi de retenue est « massive », on peut parfaitement envisager que la paroi soit également creuse en variante du premier mode (voir ci-après le septième mode de réalisation de l'invention), cet aspect étant simplement un choix technique lié à la forme souhaitée et au moule utilisé pour l'injection.

Dans ce mode de réalisation, le segment intérieur 111 s'étend suivant une ligne droite pourvue à son extrémité du côté intérieur d'un segment 127 remontant verticalement (sur une hauteur de l'ordre de 2 ou 3 cm) au droit du bord intérieur 108 de l'élément.

Le segment intérieur 111 forme sur toute la longueur de l'élément 106 une surface de réception 116 de matières quelconques telles que des écorces, de la pouzzolane ou analogues, des gravillons, du sable, du béton moulé etc. Dans l'exemple de réalisation illustré, le segment intérieur 111 est situé à une hauteur inférieure à celle du segment extérieur 109 (en section transversale). Ainsi la surface de réception 116 est située à un niveau plus bas que le rebord extérieur de l'élément 106. A titre d'exemple la hauteur de la paroi de retenue 110 du côté extérieur (vis-à-vis du segment extérieur 109) est d'environ les deux tiers de la hauteur de la paroi de retenue 110 du côté extérieur (vis-à-vis du segment intérieur 111).

Comme dans le premier mode, l'élément comporte plusieurs formes élémentaires 114 juxtaposées (panneaux) suivant la direction longitudinale, en l'occurrence six formes élémentaires. Ces formes élémentaires 114 ont un bord supérieur arqué suivant un angle de vue perpendiculaire à la direction longitudinale. Cette forme arquée a un but esthétique, afin de rappeler la forme de panneaux ou de planchettes en bois traditionnelles. Elle a également pour intérêt de présenter un relief supérieur non agressif. La section transversale précédemment décrite est par exemple située au milieu d'une forme élémentaire quelconque.

L'élément de bordure 106 comprend au moins une nervure de rigidification 126 orientée transversalement à la direction longitudinale. Cette nervure 126 est par exemple située au droit d'une extrémité de l'élément, et/ou au droit d'une délimitation entre deux formes élémentaires 114 adjacentes Chaque élément comporte à ses extrémités des moyens de fixations 121, 122, de type pion-encoche, ou tout moyen de clippage ou d'encliquetage équivalent, comme cela est typiquement illustré sur les figures. Une extrémité comporte par exemple un moyen de fixation mâle 121 tandis que l'autre extrémité comporte un moyen de fixation femelle 122 correspondant, de sorte que des éléments identiques ou similaires, ayant des moyens de fixation compatibles peuvent être assemblés bout à bout. Des moyens de fixation peuvent être prévus tant sur le segment intérieur que sur la paroi de retenue.

### Troisième mode de réalisation de l'invention :

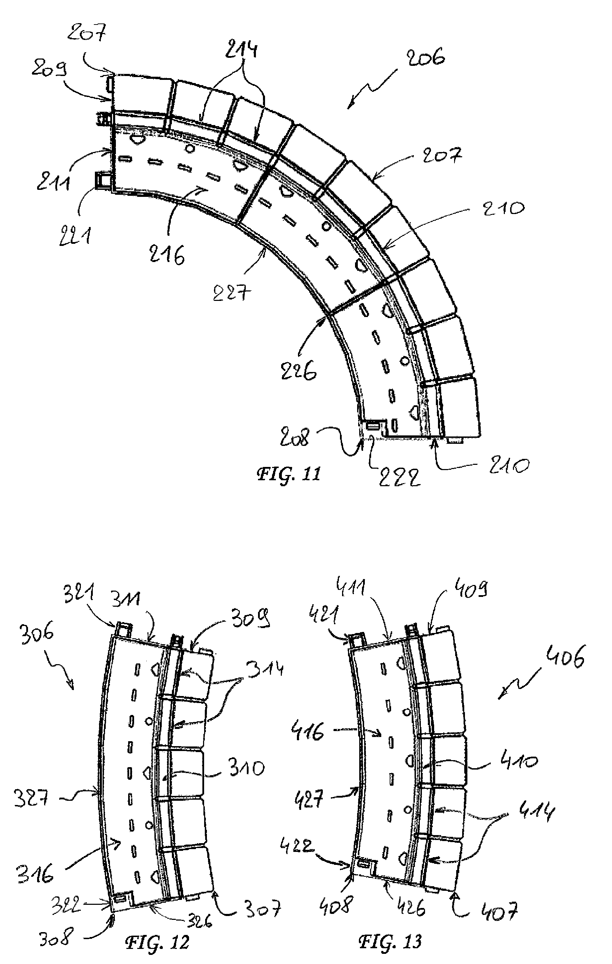

En référence à la figure 11 est présenté un troisième mode de réalisation de l'invention dans lequel l'élément 206 a une forme s'étendant suivant une direction longitudinale courbe. Dans cet exemple, le côté extérieur est situé du côté convexe de l'élément 206. Cette courbure « à petit rayon » correspond par exemple à un rayon extérieur de 1,22 m et à un rayon intérieur de 0,82 m. La courbe correspond par exemple à un quart de cercle s'inscrivant dans un carré de 0,61 m de côté (d'autres dimensions sont bien entendu envisageables sans sortir du cadre de l'invention).

Dans au moins une section transversale à la direction longitudinale, l'élément comporte un segment extérieur 209 partant du bord extérieur 207. Ce segment extérieur 209 s'étend suivant une direction sensiblement horizontale jusqu'à la paroi de retenu 210 qui s'élève de façon sensiblement verticale. Du côté intérieur à la paroi de retenue 210, celle-ci se prolonge par au moins un segment intérieur 211 sensiblement horizontal.

Dans ce mode de réalisation, la paroi de retenue peut être réalisée sous la forme d'un corps creux, comme dans le second mode de réalisation : cette paroi de retenue 210 peut être constituée d'un second segment sensiblement vertical, lui-même se prolongeant à son sommet par un troisième segment sensiblement horizontal s'étendant du côté intérieur, lui-même se prolongeant du côté intérieur par un quatrième segment sensiblement vertical plongeant vers la base de l'élément 206. Le quatrième segment se prolonge à sa base par le segment intérieur 211.

Dans ce mode de réalisation, le segment intérieur 211 s'étend suivant une ligne droite pourvue à son extrémité du côté intérieur d'un segment 227 remontant verticalement (sur une hauteur de l'ordre de 2 ou 3 cm) au droit du bord intérieur 208 de l'élément.

Le segment intérieur 211 forme sur toute la longueur de l'élément 206 une surface de réception 216 de matières quelconques telles que des écorces, de la pouzzolane ou analogues, des gravillons, du sable, du béton moulé etc.

Comme dans le second mode de réalisation, le segment intérieur 211 est situé à une hauteur inférieure à celle du segment extérieur 209 (en section transversale). Ainsi la surface de réception 216 est située à un niveau plus bas que le rebord extérieur de l'élément 206. A titre d'exemple la hauteur de la paroi de retenue 210 du côté extérieur (vis-à-vis du segment extérieur 209) est d'environ les deux tiers de la hauteur de la paroi de retenue 210 du côté extérieur (vis-à-vis du segment intérieur 211).

Comme dans les autres modes de réalisation, l'élément comporte plusieurs formes élémentaires 214 (panneaux) juxtaposées suivant la direction longitudinale, typiquement neuf formes élémentaires dans l'exemple illustré. Ces formes élémentaires 214 ont un bord supérieur arqué suivant un angle de vue radial.

L'élément de bordure 206 comprend au moins une nervure de rigidification 226 orientée transversalement à la direction longitudinale. Cette nervure 226 est par exemple située au droit d'une extrémité de l'élément, et/ou au droit d'une délimitation entre deux formes élémentaires 214 adjacentes. Chaque élément comporte à ses extrémités des moyens de fixations 221, 222, de type pion-encoche, ou tout moyen de clippage ou d'encliquetage équivalent, comme cela est typiquement illustré sur les figures. Une extrémité comporte par exemple un moyen de fixation mâle 221 tandis que l'autre extrémité comporte un moyen de fixation femelle 222 correspondant, de sorte que des éléments identiques ou similaires, ayant des moyens de fixation compatibles peuvent être assemblés bout à bout. Des moyens de fixation peuvent être prévus tant sur le segment intérieur que sur la paroi de retenue.

### Quatrième et cinquièmes modes de réalisation de l'invention :

En référence aux figures 12 et 13 sont présentés respectivement un quatrième et un cinquième modes de réalisation de l'invention dans lequel l'élément 306, 406 a une forme s'étendant suivant une direction longitudinale courbe. Ces deux modes de réalisations sont similaires à ceci près que le côté extérieur est situé du côté concave dans le quatrième mode de réalisation, tandis qu'il est situé du côté convexe dans le cinquième mode de réalisation.

Concernant le quatrième mode de réalisation de la figure 12, cette courbure « à grand rayon » (comparé au troisième mode de réalisation) correspond par exemple à un rayon extérieur de 2,74 m et à un rayon intérieur de 2,34 m. Dans l'exemple illustré, la longueur de l'élément 306 est de 0,53 m. Concernant le cinquième mode de réalisation de la figure 13, cette courbure « à grand rayon » correspond par exemple à un rayon extérieur de 2,58 m et à un rayon intérieur de 2,18 m. Dans l'exemple illustré, la longueur de l'élément 406 est de 0,5 m (d'autres dimensions sont bien entendu envisageables sans sortir du cadre de l'invention).

Dans au moins une section transversale à la direction longitudinale, l'élément 306, 406 comporte un segment extérieur 309, 409 partant du bord extérieur 307, 407. Ce segment extérieur 309, 409 s'étend suivant une direction sensiblement horizontale jusqu'à la paroi de retenu 310, 410 qui s'élève de façon sensiblement verticale. Du côté intérieur à la paroi de retenue 310, 410, celle-ci se prolonge par au moins un segment intérieur 311, 411 sensiblement horizontal.

La paroi de retenue 310, 410 est constituée d'un second segment, troisième segment, quatrième segment agencés de façon analogue à la paroi de retenue 210 du troisième mode de réalisation, formant un corps creux dont l'épaisseur est déterminée par l'écart entre le troisième et le quatrième segment.

Dans ces modes de réalisation, le segment intérieur 311, 411 s'étend suivant une ligne droite pourvue à son extrémité du côté intérieur d'un segment 327, 427 remontant verticalement (sur une hauteur de l'ordre de 2 ou 3 cm) au droit du bord intérieur 308, 408 de l'élément 306, 406.

Le segment intérieur 311, 411 forme sur toute la longueur de l'élément 306, 406 une surface de réception 316, 416 de matières quelconques telles que des écorces, de la pouzzolane ou analogues, des gravillons, du sable, du béton moulé etc.

Comme dans les second et troisième modes de réalisation, le segment intérieur 311 est situé à une hauteur inférieure à celle du segment extérieur 309, 409 (en section transversale). Ainsi la surface de réception 316, 416 est située à un niveau plus bas que le rebord extérieur de l'élément 306, 406. A titre d'exemple la hauteur de la paroi de retenue 310, 410 du côté extérieur (vis-à-vis du segment extérieur 309, 409) est d'environ les deux tiers de la hauteur de la paroi de retenue 310, 410 du côté extérieur (vis-à-vis du segment intérieur 311, 411).

Comme dans les autres modes de réalisation, l'élément comporte plusieurs formes élémentaires 314, 414 (panneaux) juxtaposées suivant la direction longitudinale, typiquement cinq formes élémentaires dans l'exemple illustré. Ces formes élémentaires 314, 414 ont un bord supérieur arqué suivant un angle de vue radial.

L'élément de bordure 306, 406 comprend au moins une nervure de rigidification 326, 426 orientée transversalement à la direction longitudinale. Cette nervure 326, 426 est par exemple située au droit d'une extrémité de l'élément, et/ou au droit d'une délimitation entre deux formes élémentaires 314, 414 adjacentes.

Chaque élément comporte à ses extrémités des moyens de fixations 321, 322, 421, 422 de type pion-encoche, ou tout moyen de clippage ou d'encliquetage équivalent, comme cela est typiquement illustré sur les figures. Une extrémité comporte par exemple un moyen de fixation mâle 321, 421 tandis que l'autre extrémité comporte un moyen de fixation femelle 322, 422 correspondant, de sorte que des éléments identiques ou similaires, ayant des moyens de fixation compatibles peuvent être assemblés bout à bout. Des moyens de fixation peuvent être prévus tant sur le segment intérieur que sur la paroi de retenue.

### Sixième mode de réalisation de l'invention :

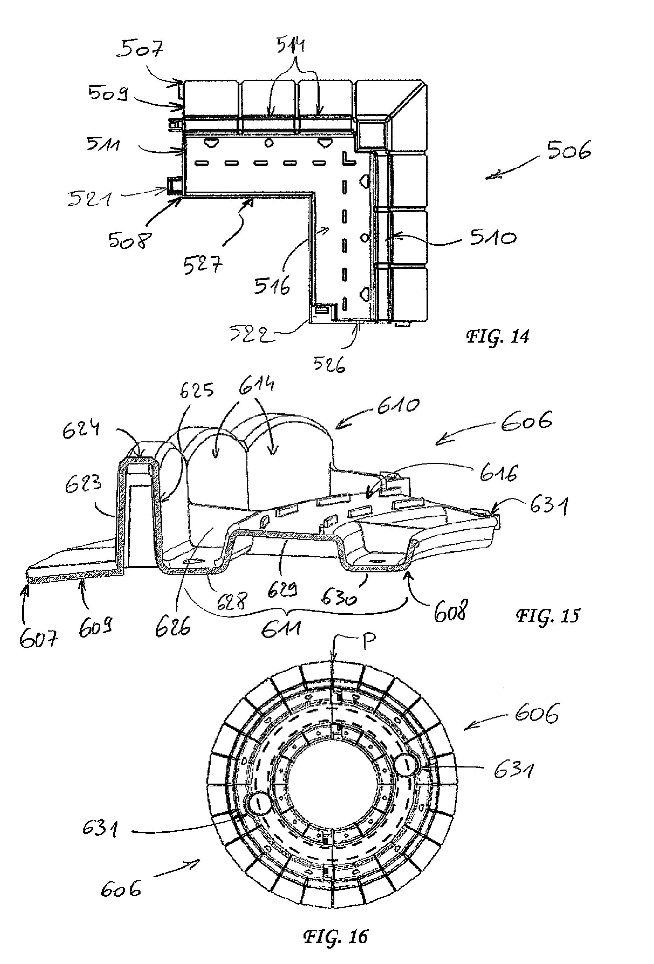

En référence à la figure 14 est présenté un sixième mode de réalisation de l'invention dans lequel l'élément 506 a une forme générale en équerre, à angle droit, le côté extérieur de l'élément étant situé du côté extérieur de l'angle. On considère donc que l'élément a une forme allongée comportant une brisure ou un angle dans une zone intermédiaire, en l'occurrence en son milieu. Ce type d'élément peut être utilisé pour constituer un angle dans une bordure de jardin. Il peut également être utilisé pour former une bordure en forme de carré autour d'un arbre par exemple. On utilise dans ce cas quatre éléments de ce type pour former les quatre coins du carré.

Dans l'exemple de la figure 14, l'élément 506 est inscrit dans un carré extérieur de 0,41 m de côté. Du côté intérieur de l'élément un carré intérieur de 0,21 m de côté est découpé dans le carré extérieur (d'autres dimensions sont bien entendu envisageables sans sortir du cadre de l'invention).

Dans au moins une section transversale à la direction longitudinale, l'élément 506 comporte un segment extérieur 509 partant du bord extérieur 507. Ce segment extérieur 509 s'étend suivant une direction sensiblement horizontale jusqu'à la paroi de retenue 510 qui s'élève de façon sensiblement verticale. Du côté intérieur à la paroi de retenue 510, celle-ci se prolonge par au moins un segment intérieur 511 sensiblement horizontal. La paroi de retenue 510 est constituée d'un second segment, troisième segment, quatrième segment agencés de façon analogue à la paroi de retenue 210 du troisième mode de réalisation, formant un corps creux dont l'épaisseur est déterminée par l'écart entre le troisième et le quatrième segment.

Dans ce mode sixième mode de réalisation, le segment intérieur 511 s'étend suivant une ligne droite pourvue à son extrémité du côté intérieur d'un segment 527 remontant verticalement (sur une hauteur de l'ordre de 2 ou 3 cm) au droit du bord intérieur 508 de l'élément 506.

Le segment intérieur 511 forme sur toute la longueur de l'élément 506 une surface de réception 516 de matières quelconques telles que des écorces, de la pouzzolane ou analogues, des gravillons, du sable, du béton moulé etc.

Comme dans le second mode de réalisation, le segment intérieur 511 est situé à une hauteur inférieure à celle du segment extérieur 509 (en section transversale). Ainsi la surface de réception 516 est située à un niveau plus bas que le rebord extérieur de l'élément 506. A titre d'exemple la hauteur de la paroi de retenue 510, 410 du côté extérieur (vis-à-vis du segment extérieur 509) est d'environ les deux tiers de la hauteur de la paroi de retenue 510 du côté extérieur (vis-à-vis du segment intérieur 511). Comme dans les autres modes de réalisation, l'élément comporte plusieurs formes élémentaires 514 (panneaux) juxtaposées suivant la direction longitudinale, typiquement six formes élémentaires dans l'exemple illustré, dont trois sur chaque pan de l'élément 506. Ces formes élémentaires 514, ont un bord supérieur arqué suivant un angle de vue radial.

L'élément de bordure 506 peut comprendre au moins une nervure de rigidification 526 orientée transversalement à la direction longitudinale. Cette nervure 526 est par exemple située au droit d'une extrémité de l'élément, et/ou au droit d'une délimitation entre deux formes élémentaires 514 adjacentes.

Chaque élément comporte à ses extrémités des moyens de fixations 521, 522 de type pion-encoche, ou tout moyen de clippage ou d'encliquetage équivalent, comme cela est typiquement illustré sur les figures. Une extrémité comporte par exemple un moyen de fixation mâle 521 tandis que l'autre extrémité comporte un moyen de fixation femelle 522 correspondant, de sorte que des éléments identiques ou similaires, ayant des moyens de fixation compatibles peuvent être assemblés bout à bout. Des moyens de fixation peuvent être prévus tant sur le segment intérieur que sur la paroi de retenue.

### Septième mode de réalisation de l'invention :

En référence aux figures 15 et 16 on a représenté une variante de réalisation du premier mode de réalisation dans lequel deux élément 606 semi-circulaires sont accolés et assemblés l'un à l'autre selon un plan de joint P. Le plateau circulaire ainsi formé a par exemple un diamètre extérieur de 0,823 m. Chaque élément 606 comporte une paroi de retenue 610 formant un corps creux comme dans le second mode de réalisation. Dans au moins une section transversale à la direction longitudinale, l'élément 606 comporte un segment extérieur 609 partant du bord extérieur 607. Ce segment extérieur 609 s'étend suivant une direction sensiblement horizontale jusqu'à la paroi de retenu 610 qui s'élève de façon sensiblement verticale. Du côté intérieur à la paroi de retenue 610, celle-ci se prolonge par au moins un segment intérieur 611 sensiblement horizontal.

La paroi de retenue 610 est constituée d'un second segment 623 sensiblement vertical, lui-même se prolongeant du côté intérieur par un troisième segment 624 sensiblement horizontal, lui-même se prolongeant par un quatrième segment sensiblement vertical plongeant vers la base de l'élément 606.

Dans ce septième mode de réalisation, le segment intérieur 611 s'étend suivant une ligne brisée se décomposant en au moins trois parties 628, 629, 630, chacune sensiblement horizontale, dont une partie centrale 629 est surélevée par rapport aux deux autres parties 628, 630, situées respectivement du côté extérieur et du côté intérieur. De plus la partie 630 située du côté intérieur se prolonge par un segment 631 relevé (sur une hauteur de l'ordre de 2 ou 3 cm) de façon sensiblement verticale au droit du bord intérieur 608 de l'élément. On note que les parties 628, 630 situées respectivement du côté extérieur et du côté intérieur de la partie centrale 629 sont sensiblement à la même hauteur que le segment extérieur 609 formant le rebord extérieur de l'élément 606.

Le segment intérieur 611 forme sur toute la longueur de l'élément 606 une surface de réception 616 de matières quelconques telles que des écorces, de la pouzzolane ou analogues, des gravillons, du sable, du béton moulé etc.

Comme dans les autres modes de réalisation, l'élément comporte plusieurs formes élémentaires 614 (panneaux) juxtaposées suivant la direction longitudinale, typiquement douze formes élémentaires dans l'exemple illustré. Ces formes élémentaires 614, ont un bord supérieur arqué suivant un angle de vue radial.

L'élément de bordure 606 peut comprendre au moins une nervure de rigidification 626 orientée transversalement à la direction longitudinale, c'est-à-dire orientée radialement dans cet exemple. Cette nervure 626 est par exemple située au droit d'une extrémité de l'élément, et/ou au droit d'une délimitation entre deux formes élémentaires 614 adjacentes. Comme le montre la figure 16, chaque élément peut en outre comporter un orifice 631 permettant le passage d'un éventuel tuteur (non représenté) lorsque deux éléments 606 sont assemblés et posés au sol autour d'un végétal.

**Compléments applicables à tous les modes de réalisation** précédemment décrits :
- le rebord extérieur définit pas le segment extérieur 9, 109-609 peut comporter des formes élémentaires prolongeant horizontalement les formes élémentaires matérialisées sur la paroi de retenue 10, 110-610. Ce rebord extérieur peut en effet être visible à la surface du sol, et il est judicieux que son aspect rappelle également des panneaux ou planchettes de bois traditionnelles juxtaposé(e)s.
- la surface de réception 16, 116-616 de n'importe quel mode de réalisation peut comporter un relief ou des aspérités du côté de la face supérieure, de manière à contribuer au calage de la matière chargée sur cette surface de réception. Ces reliefs peuvent être constitués par les nervures de rigidication 126-626 elles-mêmes prévues sur la surface de réception de chaque élément 6, 106-606.
- des orifices peuvent être percés dans la surface de réception 16, 116-616, ces orifices permettant le passage éventuel de piquets de fixation enfoncés dans le sol, destinés à arrimer plus fermement l'élément 6, 106-606 au sol. Les dimensions de ces orifices sont de l'ordre de 1 ou 2 cm au maximum (voir à titre d'exemple l'orifice 132 à la figure 9). L'emploi de ces piquets est facultatif. Une disposition des piquets tous les 50 cm par exemple est appropriée.
- des orifices ou perçages peuvent être prévus pour permettre une évacuation de l'eau située à l'aplomb de la surface de réception 16, 116-616. Voir à titre d'exemple les orifices 133 à la figure 9). Des perçages peuvent également être prévus avec une plus grande densité vers le côté intérieur que vers le côté extérieur.
- des aspérités ou crampons (non représentés) peuvent être prévus sur la surface inférieure de l'élément de bordure 6, 106-606, de manière à empêcher ou prévenir tout glissement de l'élément à la surface du sol. De telles aspérités peuvent dépasser de l'ordre de quelques centimètres de la face inférieure du segment extérieur 109-609.
- on note également que l'élément de bordure selon l'invention peut être disposé sur le sol de deux façons différentes :
   * soit il est simplement posé au sol de sorte que le rebord extérieur correspondant au segment extérieur 109-609 (dans une section transversale) soit sensiblement au niveau de la surface du sol. Le segment intérieur 111, 611 est alors enfoncé dans le sol, à un niveau plus bas, destiné à être recouvert par de la matière comme indiqué précédemment,
   * soit l'élément est enfoui plus profondément dans le sol, de sorte que le rebord extérieur correspondant au segment extérieur 109-609 (dans une section transversale) puisse être recouvert d'une couche de matériau (terre, écorce, pouzzolane etc.). L'enfouissement du rebord extérieur peut être de plusieurs centimètres, par exemple d'une dizaine de centimètres. Dans ce cas, la paroi de retenue 110-610 est également enfouie, au moins en partie. Seul le sommet des formes élémentaires 114-614 peut éventuellement dépasser de la surface du sol. On note également que dans ce cas, la zone intérieure peut être recouverte de matériau au même niveau que la couche extérieure ou avec une épaisseur moindre, de manière à former une zone en contrebas de la zone extérieure.
   - par ailleurs, l'élément de bordure suivant l'invention est particulièrement utile et avantageux lorsqu'on doit recouvrir le sol avec une nappe ou couche de géotextile, notamment destinée à empêcher la pousse de « mauvaises herbes ». Une bordure de jardin constituée de plusieurs éléments selon l'invention assemblés bout à bout selon un dessin ou une géométrie particulière, notamment des éléments choisis dans le second, le troisième, le quatrième, le cinquième ou le sixième mode de réalisation, permet ainsi de constituer un moyen de plaquage au sol et de maintien en bordure et/ou en périphérie de la nappe de géotextile. De plus, lors de la pose, les éléments de bordure peuvent être utilisés à la façon d'un gabarit pour faciliter la découpe de la nappe excédentaire à l'extérieur de la bordure. Un outil de coupe (cutter ou analogue) est utilisé en prenant appui sur le bord extérieur 107-607 de chaque élément.

A ce titre, l'invention porte également sur le procédé de pose au sol d'une nappe de type géotextile ou analogue et d'un ensemble d'éléments de bordure de jardin, ledit élément ayant une forme générale allongée s'étendant suivant une direction longitudinale, notamment droite ou courbe ou brisée, ayant dans au moins une section transversale à ladite direction longitudinale, une forme définie entre un bord extérieur 107-607 et un bord intérieur 108-608 de la bordure de jardin, **caractérisé en ce qu**'il comprend les étapes suivantes :
- pose au sol de la nappe ayant des dimensions supérieures au contour définitif de la zone à recouvrir,
- pose au sol et assemblage entre eux de plusieurs éléments 106-606 de bordure de jardin, par-dessus la nappe, en suivant un dessin correspondant sensiblement au contour définitif de la nappe et de la bordure souhaitée,
- découpe d'une partie de la nappe débordant à l'extérieur des éléments 106-606 de la bordure de jardin, notamment à l'aide d'un outil de coupe, en suivant le bord extérieur 107-607 des éléments qui sont utilisés à la façon d'un gabarit.

Dans ce dernier cas, les piquets de maintien traversant les éléments ou des aspérités / crampons dépassant sous les éléments sont particulièrement intéressant pour agripper la nappe située sous les éléments et ainsi éviter son glissement relatif par rapport aux éléments. On peut par ailleurs prévoir des agrafes de maintien de la nappe, ayant par exemple la forme de fils métalliques en U (hauteur environ 20 cm, diamètre environ 5 à 6 mm) enfoncés dans le sol au travers de perçages prévus dans les éléments. De telles agrafes peuvent être disposées avec un écart de l'ordre de 20 à 40 cm.

Bien entendu, l'invention n'est pas limitée aux moyens qui viennent d'être décrits et comprend tous les équivalents techniques.

Dans des variantes de réalisation de l'invention, l'élément de bordure peut être un matériau composite, chargé en particules végétales ou minérales. Dans d'autres variantes de réalisation de l'invention, on peut également envisager que l'élément de bordure soit réalisé en fonte d'alliage métallique, avec une éventuelle finition chimique, en peinture etc.

Dans encore d'autres variantes de réalisation de l'invention, l'élément de bordure peut être réalisé à partir de particules végétales (par exemple du bois) compactées et imprégnées ou non, ce type de matériau étant particulièrement intéressant dans une optique écologique.

On note également que dans d'autres modes de réalisation non représentés de l'invention, la paroi de retenue peut être constituée d'éléments plus massifs que des planchettes, par exemples des éléments présentant un aspect extérieur de pierres taillées ou brutes juxtaposées les unes aux autres ou encore un aspect de terre cuite, un aspect brique etc. Bien entendu, ces finitions ou aspects sont purement facultatifs.

Dans le cas d'éléments assemblés pour former une bordure entourant un arbre, on peut envisager une autre variante que celles déjà décrite, utilisant non pas deux éléments semi-circulaires, mais un premier élément en forme de U et un second élément destiné à fermer l'ouverture du U.

Les moyens de fixation entre les éléments peuvent également être remplacés par des vis de fixation, ou même être absents du dispositif.

## Revendications

1. Elément (6, 106-606) de bordure de jardin, **caractérisé en ce qu'**il a une forme générale allongée s'étendant suivant une direction longitudinale, notamment droite ou courbe ou brisée, ayant dans au moins une section transversale à ladite direction longitudinale, une forme définie entre un bord extérieur (7, 107-607) et un bord intérieur (8, 108-608) de la bordure de jardin, ladite forme présentant en partant du bord extérieur (7, 107-607) et en allant vers le bord intérieur (8, 108-608), un segment extérieur (9, 109-609) sensiblement horizontal, se prolongeant du côté intérieur par une paroi de retenue (10, 110-610) sensiblement verticale, et **en ce que** la paroi de retenue se prolonge en outre du côté intérieur par au moins un segment intérieur (11, 111-611) formant une ligne, notamment droite ou courbe ou brisée, s'étendant suivant une directement générale sensiblement horizontale jusqu'au bord intérieur (8, 108-608).

2. Elément (106-606) de bordure de jardin selon la revendication 1, **caractérisé en ce que** le segment extérieur (109-609) constitue un premier segment se prolongeant par un second segment (123-623) s'élevant de façon sensiblement verticale, lui-même se prolongeant par un troisième segment (124-624) sensiblement horizontal, lui-même se prolongeant par un quatrième segment (125-625) plongeant vers le sol de façon sensiblement verticale, les second, troisième et quatrième segments (123-623, 124-624, 125-625) constituant la paroi de retenue (110-610) dont l'épaisseur correspond à l'écart entre les second (123-623) et quatrième segment (125-625), le segment intérieur (111-611) formant un cinquième segment prolongeant le quatrième segment (125-625).

3. Elément (6, 106-606) de bordure de jardin selon la revendication 1 ou 2, **caractérisé en ce qu'**il est constitué d'un seul élément monobloc en matière plastique obtenue par moulage ou injection.

4. Elément (6, 106-606) de bordure de jardin selon l'une quelconque des revendications 1 à 3, **caractérisé en ce qu'**au moins dans la zone de la paroi de retenue (10, 110-610), l'élément est constitué, suivant la direction longitudinale, d'une série de formes élémentaires (14, 114-614) identiques et juxtaposées les unes aux autres, délimitées entre elles par des discontinuités de surface, telles que des angles, empreintes creuses ou fentes.

5. Elément (6, 106-606) de bordure de jardin selon la revendication 4, **caractérisé en ce que** chaque forme élémentaire (14, 114-614) a un bord supérieur arqué suivant un angle de vue perpendiculaire à la direction longitudinale.

6. Elément (6, 106-606) de bordure de jardin selon la revendication 4 ou 5, **caractérisé en ce qu'**il comporte au moins une nervure de rigidification (126-626) orientée transversalement à la direction longitudinale, située notamment au droit d'une extrémité de l'élément (106-606).

7. Elément (6, 106-606) de bordure de jardin selon l'une quelconque des revendications 1 à 6, **caractérisé en ce qu'**il comprend à ses deux extrémités opposées suivant la direction longitudinale des moyens de fixation (21, 121-621, 22, 122-622) permettant de le fixer à au moins un second élément de section transversale analogue, ce second élément étant également pourvu de moyens de fixation de formes conjuguées.

8. Elément (106) de bordure de jardin selon l'une quelconque des revendications précédentes, **caractérisé en ce que** la direction longitudinale est rectiligne.

9. Elément (6 ; 206, 306, 406) de bordure de jardin selon l'une quelconque des revendications 1 à 7, **caractérisé en ce que** la direction longitudinale s'étend suivant la forme d'un secteur angulaire, dont l'angle est choisi parmi les valeurs suivantes : 180°, 90° ou un angle inférieur à 90°, par exemple 22,5°.

10. Elément (506) de bordure de jardin selon l'une quelconque des revendications 1 à 7, **caractérisé en ce que** la direction longitudinale s'étend en formant un angle à 90°.

11. Elément (606) de bordure de jardin selon l'une quelconque des revendications 1 à 10, **caractérisé en ce que** les segments extérieur (609) et intérieur (611) de part et d'autre de la paroi de retenue (610) sont sensiblement à la même hauteur.

12. Elément (106-506) de bordure de jardin selon l'une quelconque des revendications 1 à 10, **caractérisé en ce que** le segment intérieur (111-511), situé du côté intérieur de la paroi de retenue (110-510) est à une hauteur inférieure à celle du segment extérieur (109-509), situé du côté extérieur.

13. Elément (106-506) de bordure de jardin selon l'une quelconque des revendications 1 à 12, **caractérisé en ce que** ledit au moins segment intérieur (111-511) comprend un unique segment sensiblement horizontal prolongé par un segment relevé (127-527) de façon sensiblement verticale au droit du bord intérieur (108-508) de l'élément.

14. Elément (606) de bordure de jardin selon l'une quelconque des revendications 1 à 12, **caractérisé en ce que** ledit au moins segment intérieur (611) se décompose en au moins trois parties sensiblement horizontales dont une partie centrale (629) est surélevée par rapport aux deux autres parties (628, 630), situées respectivement du côté extérieur et du côté intérieur, ladite partie du côté intérieur (630) se prolongeant par un segment relevé de façon sensiblement verticale au droit du bord intérieur (608) de l'élément.

15. Elément de bordure de jardin selon l'une quelconque des revendications 1 à 14, **caractérisé en ce qu'**il comprend des orifices (132, 133) ménagés dans des zones sensiblement horizontales, permettant d'être traversés par des moyens d'ancrage de l'élément au sol, tels que des piquets ou agrafe.

16. Procédé de pose au sol d'une nappe de type géotextile ou analogue et d'un ensemble d'éléments (6, 106-606) de bordure de jardin, chaque élément (6, 106-606) ayant une forme générale allongée s'étendant suivant une direction longitudinale, notamment droite ou courbe ou brisée, ayant dans au moins une section transversale à ladite direction longitudinale, une forme définie entre un bord extérieur (7, 107-607) et un bord intérieur (8, 108-608) de la bordure de jardin, **caractérisé en ce qu'**il comprend les étapes suivantes :
- pose au sol de la nappe ayant des dimensions supérieures au contour définitif de la zone à recouvrir,
- pose au sol et assemblage entre eux de plusieurs éléments (6, 106-606) de bordure de jardin, par-dessus la nappe, en suivant un dessin correspondant sensiblement au contour définitif de la nappe et de la bordure souhaitée,
- découpe d'une partie de la nappe débordant à l'extérieur des éléments (6, 106-606) de la bordure de jardin, notamment à l'aide d'un outil de coupe, en suivant le bord extérieur (7, 107-607) des éléments qui sont utilisés à la façon d'un gabarit.
